# EUROPEAN PATENT APPLICATION

(11) **EP 4 714 257 A1**
(43) Date of publication of application: **25.03.2026**
(21) Application number: 25203852.6
(22) Date of filing: 23.09.2025
(51) Int. Cl.: A01G 20/47, A47L 9/10

(54) **SUCTION DEVICE AND SUCTION SYSTEM**

(30) Priority: 24.09.2024 JP 2024165268
(71) Applicant: Yamabiko Corporation, Ohme-shi, Tokyo 198-8760 (JP)
(72) Inventor: NAKAGANNA, Hiroshi, Ohme-shi, Tokyo, 1988760 (JP); AONO, Koji, Ohme-shi, Tokyo, 1988760 (JP)
(74) Representative: Winter, Brandl - Partnerschaft mbB

(57) **Abstract**

According to the invention, a volute case (20) including a suction port (22) and a fan case (40) accommodating a blower fan (44) and including an exhaust port (43) is provided. The volute case is configured to form a flow path (R21), together with the fan case, from the suction port to the exhaust port, and is connected to the fan case on an upstream side of the flow path, an opening (23) being further provided on a radially outer side of the volute case. The opening is configured to allow attachment of a first storage unit (61) configured to store an object that passes through the opening among objects sucked from the suction port by air flow generated in the flow path by the blower fan.

## Description

### BACKGROUND

The present disclosure relates to a suction device and suction system.

### RELATED ART

JP2009114858A discloses a portable powered suction device comprising: a portable fan case formed with an intake port portion along a drive shaft of a fan, and an exhaust port portion extending in the centrifugal direction of the fan; wherein a suction pipe is attached to the intake port portion, and an object is sucked from a tip end of the suction pipe; wherein a fan protection member is provided in the intake port portion so as to be rotatable integrally with the drive shaft and located on the upstream side in the intake direction of the fan; and wherein the fan protection member includes a collision-receiving surface perpendicular to the intake direction of the intake port portion.

In a suction device, objects such as small stones and dead leaves may also be sucked in. When such objects collide with a blower fan inside the device, unpleasant noise may be generated due to the impact, and the impact applied to the blower fan may be transmitted to a handle, thereby possibly causing the handle to vibrate.

In view of the foregoing circumstances, the present disclosure provides a suction device and the like capable of suppressing the generation of unpleasant noise caused by the sucked objects and the vibration of the handle.

According to one embodiment of the present disclosure, there is provided a suction device, comprising: a volute case including a suction port; and a fan case accommodating a blower fan and including an exhaust port, wherein: the volute case is configured to form a flow path, together with the fan case, from the suction port to the exhaust port, and is connected to the fan case on an upstream side of the flow path, an opening being further provided on a radially outer side of the volute case; and the opening is configured to allow attachment of a first storage unit configured to store an object that passes through the opening among objects sucked from the suction port by air flow generated in the flow path by the blower fan.

According to this aspect, it is possible to provide a suction device or the like capable of suppressing the generation of unpleasant noise and vibration of the handle caused by a sucked object.

### BRIEF DESCRIPTION OF DRAWINGS

FIG. 1 shows an overall configuration of a suction system 1.
FIG. 2 is a right side view of the suction system 1.
FIG. 3 is a left side view of the suction system 1.
FIG. 4 is a front view of the suction system 1.
FIG. 5 is a rear view of the suction system 1.
FIG. 6 is a top view of the suction system 1.
FIG. 7 is a bottom view of the suction system 1.
FIG. 8 is a perspective view showing a partially exploded portion of the suction system 1.
FIG. 9 is a cross-sectional view taken along cutting line A1-A1 of FIG. 4.
FIG.10 is a cross-sectional view taken along cutting line A2-A2 of FIG. 2.
FIG.11 is a cross-sectional view taken along cutting line A3-A3 of FIG. 5.
FIG.12 is a view showing another example of the volute case.
FIG.13 is a view showing another example of the suction device.
FIG.14 is a cross-sectional view of suction device 2b.
FIG.15 is a view showing another example of the suction section.
FIG.16 is a view showing another example of the storage unit.
FIG.17 is a view showing another example of a mounting method of the first storage unit.

### DETAILED DESCRIPTION

Hereinafter, embodiments of the present disclosure will be described with reference to the drawings. Various features described in the embodiments below may be combined with one another.

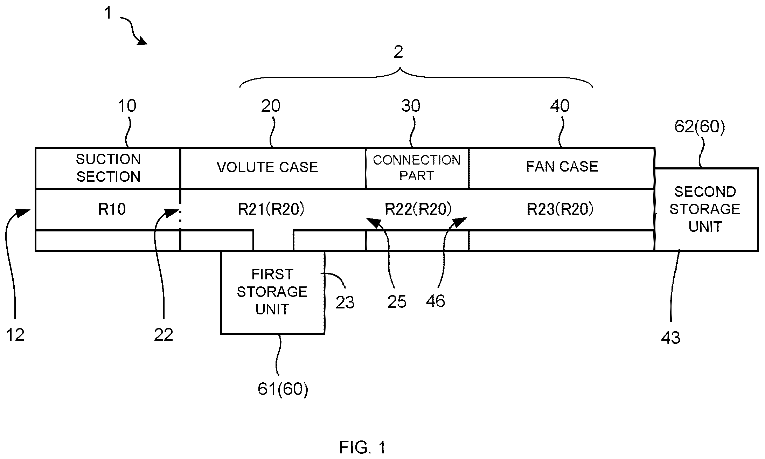

FIG. 1 shows an overall configuration of a suction system 1. The suction system 1 is a device that removes objects-such as dust, dirt, debris, fallen leaves, and small stones-that are deposited on a floor surface or a similar surface, by drawing them in along with air. The suction system 1 includes a suction section 10, a suction device 2, and a storage unit 60. The suction device 2 is configured to generate an airflow for drawing in air and objects. The suction device 2 forms a flow path R20 therein. The suction section 10 is attached to the suction device 2 and forms a flow path R10, which is connected to the flow path R20.

The storage unit 60 is configured to store objects sucked by the suction device 2. The storage unit 60 includes the first storage unit 61 and the second storage unit 62, both of which are attachable to the suction device 2. The first storage unit 61 stores objects on the upstream side of the flow path R20, while the second storage unit 62 stores objects on the downstream side of the flow path R20. To clarify the attachment positions of the first storage unit 61 and second storage unit 62, the suction device 2 is described below.

The suction device 2 includes a volute case 20, a connection part 30, and a fan case 40. The volute case 20 forms an flow path R21, which is a part of the flow path R20. The connection part 30 forms a flow path R22, which is a part of the flow path R20. The fan case 40 forms a flow path R23, which is a part of the flow path R20. The connection part 30 connects the volute case 20 and the fan case 40, and thereby the flow path R21, R22, and R23 are connected to form the flow path R20.

The volute case 20 includes a suction port 22, an opening 23, and a connection port 25. The suction port 22 is located at the upstream end of the flow path R21, and the connection port 25 is located at the downstream end of the flow path R21. That is, the flow path R21 extends from the suction port 22 to the connection port 25. The opening 23 is provided at an intermediate point of the flow path R21. The first storage unit 61 is attached to the opening 23. The first storage unit 61 stores objects that are sucked from the suction port 22 and discharged through the opening 23.

The fan case 40 includes a connection port 46 and an exhaust port 43. The connection port 46 is located at the upstream end of the flow path R23, and the exhaust port 43 is located at the downstream end of the flow path R23. That is, the flow path R23 extends from the connection port 46 to the exhaust port 43.
The connection port 25 of the volute case 20 and the connection port 46 of the fan case 40 are connected by the flow path R22, which is formed by the connection part 30. The second storage unit 62 is attached to the exhaust port 43, which is located at the most downstream end of the flow path R20.
The second storage unit 62 stores objects that are drawn in from the suction port 22 but are not captured by the first storage unit 61.

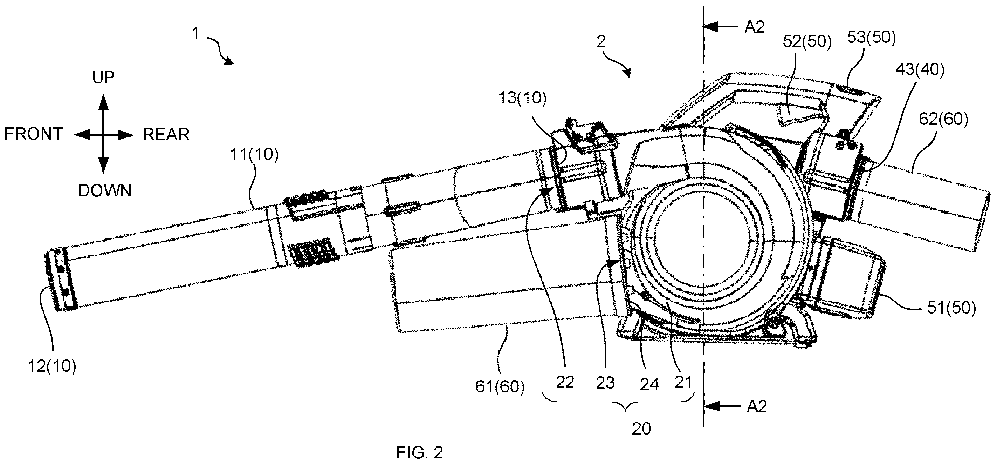

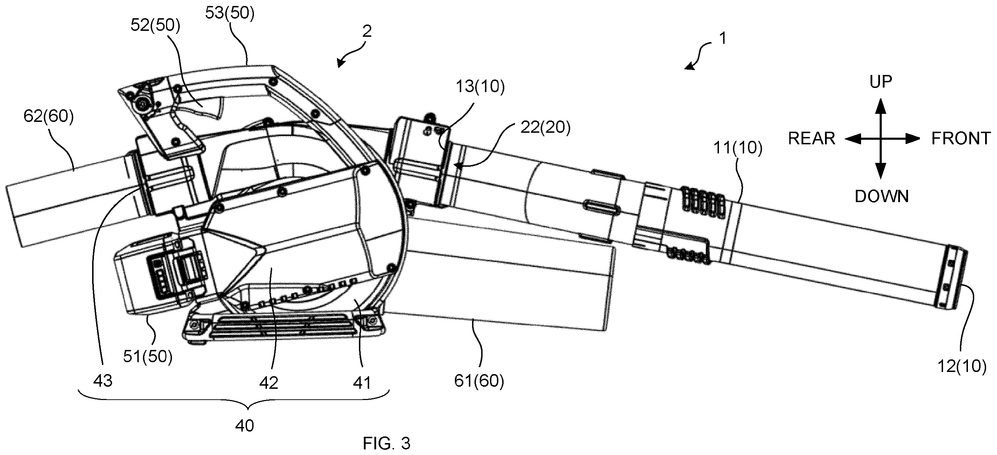

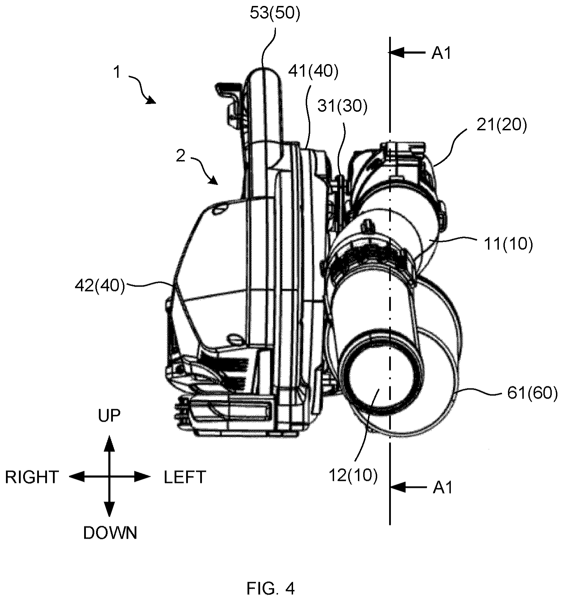

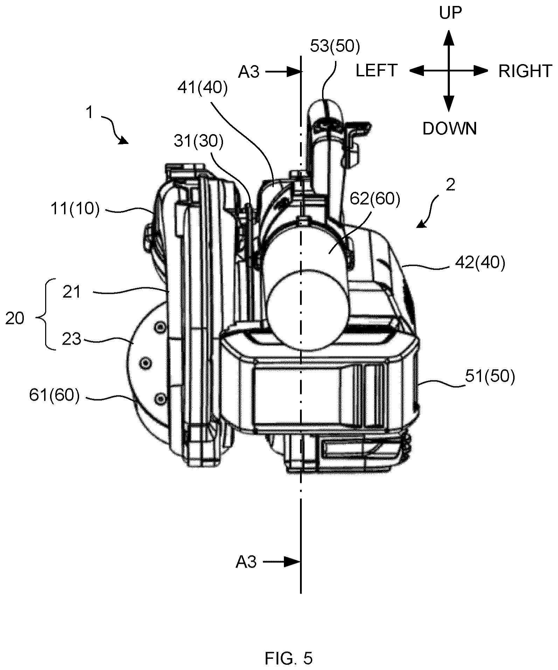

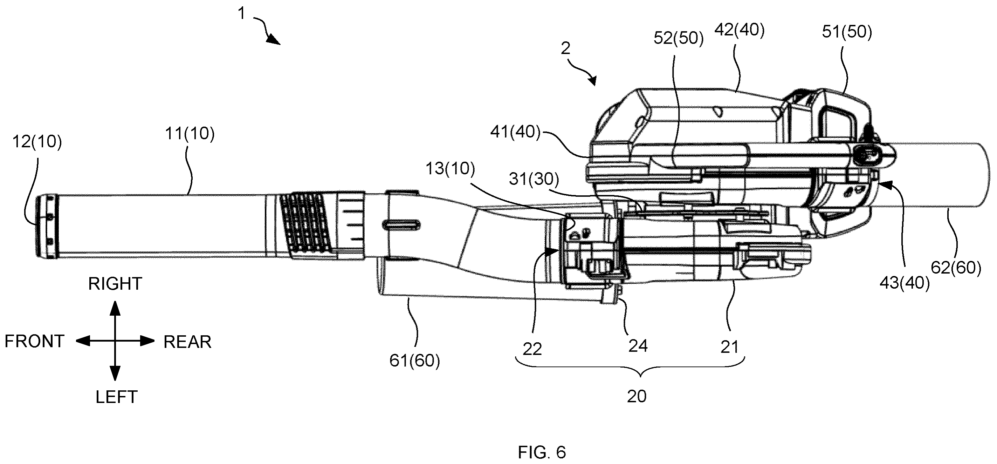

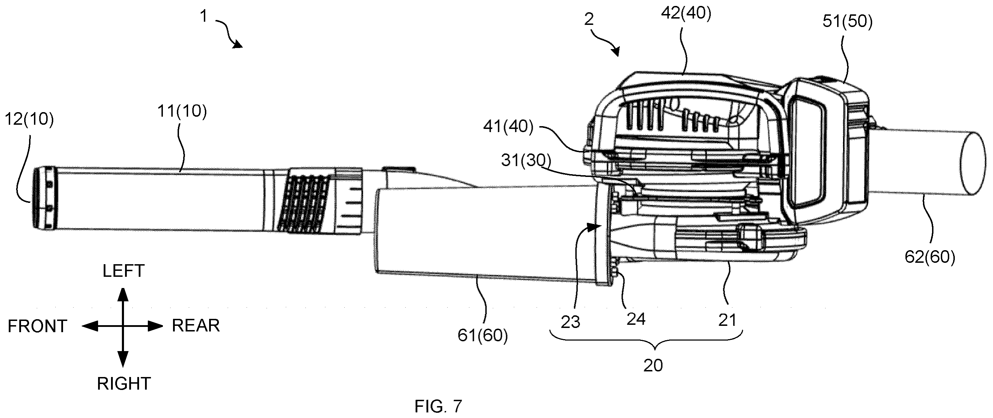

Next, the details of each component will be described with reference to the external views of the suction system 1. FIG. 2 is a right side view of the suction system 1. FIG. 3 is a left side view of the suction system 1. FIG. 4 is a front view of the suction system 1. FIG. 5 is a rear view of the suction system 1. FIG. 6 is a top view of the suction system 1. FIG. 7 is a bottom view of the suction system 1. In these figures, the front-rear direction, vertical direction, and lateral direction in the installation state of the suction system 1 placed on the ground are indicated by arrows. Note that the right side view shows the suction system 1 as seen from the right, and the left side view as seen from the left, both when viewed from the front (the forward direction). Meanwhile, the lateral direction of the suction system 1 is defined based on the operator's point of view: the direction to the operator's right is defined as the rightward direction, and the direction to the operator's left as the leftward direction.

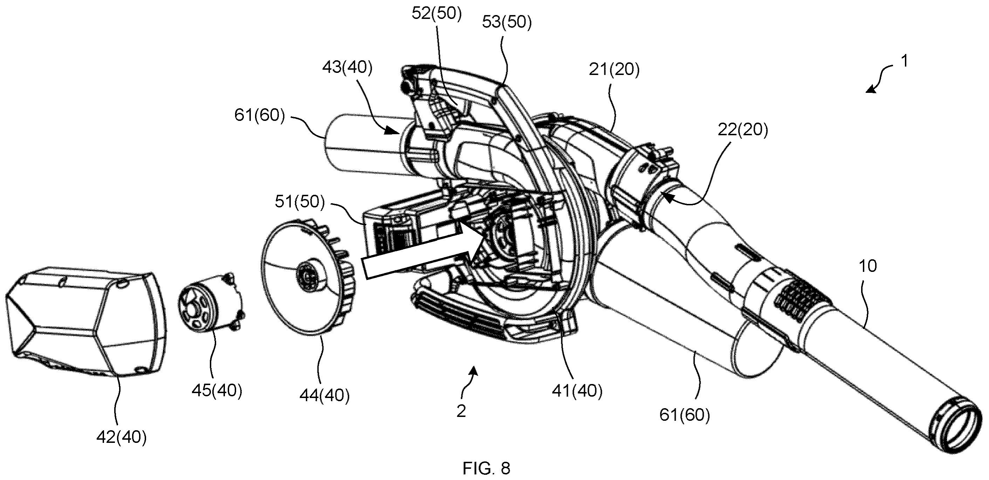

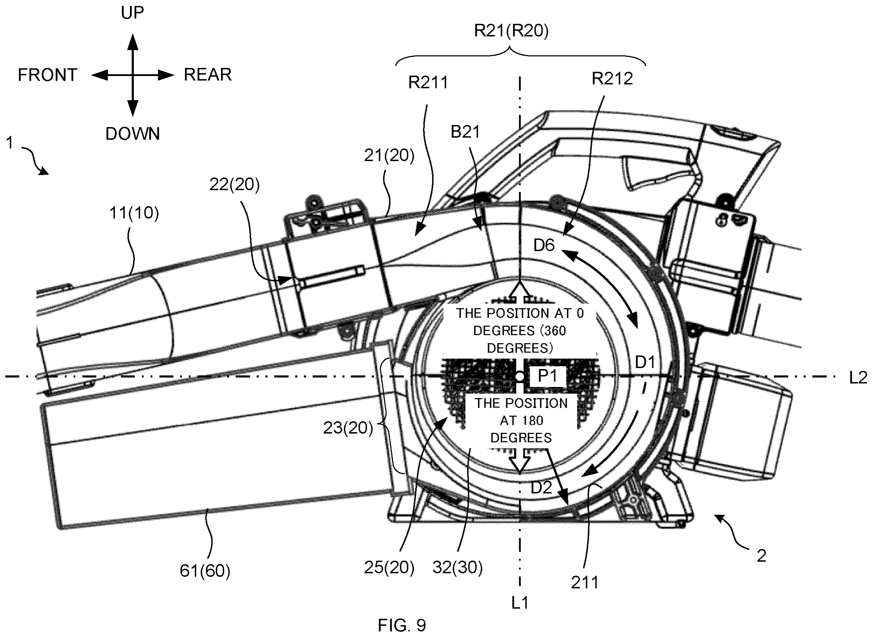

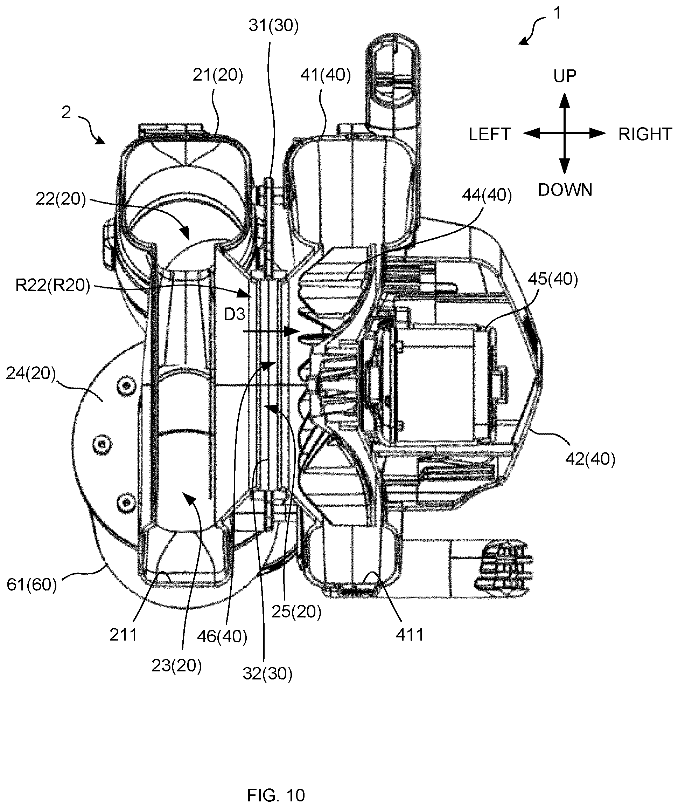

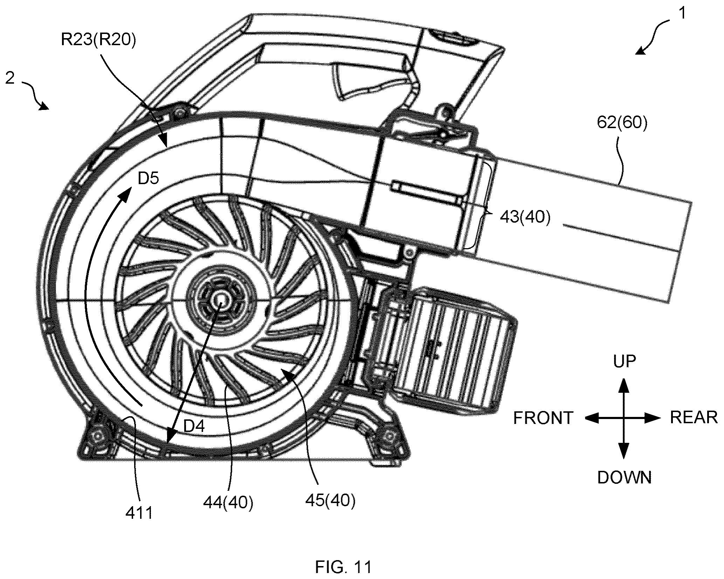

FIG. 8 is a perspective view showing a partially exploded portion of the suction system 1. FIG. 9 is a cross-sectional view taken along cutting line A1-A1 of FIG. 4. FIG.10 is a cross-sectional view taken along cutting line A2-A2 of FIG. 2. FIG.11 is a cross-sectional view taken along cutting line A3-A3 of FIG. 5.

As shown in FIGs. 1 and 2, the suction section 10 includes a pipe portion 11, a suction inlet 12, and an attachment portion 13. The pipe portion 11 is formed of a cylindrical member and includes the suction inlet 12 and the attachment portion 13 at opposite ends. The attachment portion 13 is attached to the suction port 22 of the suction device 2.
Accordingly, the suction force generated in the suction device 2 is transmitted through the suction section 10 to the suction inlet 12, so that air and foreign matter are drawn in through the suction inlet 12. The suction section 10 may be either flexible or inflexible.

The volute case 20 is a case configured to guide air along a spiral path. The volute case 20 includes a housing 21, the suction port 22, the opening 23, the attachment portion 24, and the connection port 25. As shown in FIG. 9, the housing 21 includes an inner wall surface 211, and forms the flow path R21 surrounded by the inner wall surface 211. The flow path R21 is formed by a straight cylindrical flow path R211 starting from the suction port 22 that is connected to a spiral-shaped flow path R212 extending toward the connection port 25.

In the above-described installation state (a state in which the suction system 1 is placed on the ground and the suction inlet 12 is disposed at the front in a side view), the position along the flow path R212 is represented by an angle as shown in FIG 9 in order to explain the position along the flow path R212. Specifically, a virtual line L1 is defined as extending perpendicularly to the ground through a rotation axis center P1 of a centrifugal fan 44 (blower fan) provided in a fan case 40, which will be described later, such that the vertically upward direction corresponds to the position at 0 degrees and the vertically downward direction corresponds to the position at 180 degrees. Other positions are represented by angles from 0 to 360 degrees, increasing in accordance with the rotation direction D1 of the centrifugal fan 44. The rotation axis center P1 of the centrifugal fan 44 is also considered as the rotation axis center of the volute case 20.

A boundary B21 between the flow paths R211 and R212 is positioned between 300 degrees and 360 degrees, with 360 degrees treated as equivalent to 0 degrees. The downstream portion of the flow path R21 - the flow path R212 - is formed in an arc shape, along which air flows in the rotation direction D1.
The opening 23 is further provided on a radially outer side of the flow path R212 in the centrifugal direction D2, at a position from 180 degrees to 285 degrees, and more specifically, between 225 degrees and 285 degrees, downstream in the rotation direction D1.

Objects sucked via the housing 21 are subjected to centrifugal force while moving along the flow path R212, are pressed against an outer portion in the centrifugal direction D2 of the inner wall surface 211, move in the rotation direction D1, exit through the opening 23 to the outside of the flow path R212, and are stored in the first storage unit 61. The first storage unit 61 is attached to the opening 23 via the attachment portion 24. The first storage unit 61 is a container having a tapered cylindrical shape and a bottom surface.

The first storage unit 61 preferably has sufficient rigidity to prevent deformation due to the weight of stored objects or negative pressure on the side of the flow path R212, while being as lightweight as possible.
When the pipe portion 11, that is, the front side of the suction system 1, is directed obliquely downward to suck objects on the ground, the position of the opening 23 moves toward a vertically downward position, and gravity acts on the objects, thereby facilitating storage of the objects in the first storage unit 61 through the opening 23.

As shown in FIGS. 4 and 10, the volute case 20 and the fan case 40 are connected by a connecting member 31 provided in the connection part 30. The connection part 30 forms a flow path R22 between the connection port 25 of the volute case 20 and the connection port 46 of the fan case 40.

As shown in FIG. 9, the length of the inner wall surface 211 in the centrifugal direction D2 becomes shorter as it proceeds in the rotation direction D1, and becomes shortest around a position located inside the boundary B21 and beyond the opening 23. Accordingly, a part of the air flowing through the flow path R212 flows into the first storage unit 61, while the remaining part is pushed by the inner wall surface 211 and flows out of the connection port 25 of the volute case 20 into the fan case 40 through the connection part 30 and the connection port 46. At that time, light objects that are not stored in the first storage unit 61 also flow together with the air into the fan case 40.

As shown in FIG. 10, air and similar matter flowing out of the connection port 25 move in direction D3 toward the connection port 46, pass through the flow path R22, and flow into the fan case 40 from the connection port 46. As shown in FIGs. 9 and 10, a mesh portion 32 is provided in the flow path R22. The mesh portion 32 is sized and shaped to cover the entire flow path R22 and prevents large objects (for example, small branches or stones) larger than the mesh from flowing into the fan case 40.

As shown in FIG. 8, the fan case 40 includes a housing 41, a cover 42, an exhaust port 43, a centrifugal fan 44, and a motor 45.

The centrifugal fan 44 and the motor 45 are accommodated in an internal space formed by covering the housing 41 with the cover 42. The motor 45 rotates the centrifugal fan 44 in rotation direction D5, as shown in FIG. 11. A flow path R23 is formed around the centrifugal fan 44. Air and similar matter flowing in from the connection port 46 are moved in the centrifugal direction D4 by the rotating centrifugal fan 44 and flow along the flow path R23 in the rotation direction D5.

An exhaust port 43 is provided at a downstream end of the flow path R23 in the rotation direction D5, and air and similar matter flowing through the flow path R23 are discharged through the exhaust port 43.
Among the objects contained in the air flowing through the flow path R20, small, light objects such as dust and dirt, which are not stored in the first storage unit 61 and pass through the mesh portion 32, are stored in a second storage unit 62 through the exhaust port 43.
The second storage unit 62 is a filter or a dust bag made of a material such as a nonwoven fabric.

As shown in FIG. 2, the suction device 2 further includes a driving operation portion 50. The driving operation portion 50 is configured to receive operations for driving the suction device 2. The driving operation portion 50 includes a battery 51, a lever 52, and a handle 53. The battery 51 supplies electric power to the motor 45. The lever 52 receives operations for switching on and off the power supply to the motor 45 and for adjusting the rotation speed of the motor 45. The handle 53 is a portion to be gripped by an operator when lifting the suction system 1.

As described above, the suction device 2 includes volute case 20 including the suction port 22, and the fan case 40 accommodating the centrifugal fan 44 (an example of the blower fan) and including an exhaust port 43. The volute case 20 is configured to form the flow path R20, together with the fan case 40, from the suction port 22 to the exhaust port 43
The volute case 20 is configured to be connected to the fan case 40 on an upstream side of the flow path R20 relative to the fan case 40, an opening 23 being further provided on a radially outer side in a centrifugal direction D2. The opening 23 is configured to allow attachment of the first storage unit 61 configured to store an object that passes through the opening 23 among objects sucked from the suction port 22 by air flow generated in the flow path R20 by the centrifugal fan 44.

When the sucked objects collide with the blower fan, unpleasant noise may be generated or vibrations may be transmitted to an operator's hand gripping the handle 53, depending on the size, weight, or hardness of the objects and the impact on the blower fan. Objects larger than the spacing between the blades of the blower fan may become jammed in front of the blower fan or repeatedly come into contact with the blades of the blower fan. In the suction system 1, by providing the opening 23 in the volute case 20, such objects can exit through the opening 23 before reaching the blower fan.
As a result, compared with a case where the opening 23 is not provided, the generation of unpleasant noise caused by objects such as small stones or twigs sucked from the suction port 22 and the occurrence of vibrations of the handle 53 can be suppressed, thereby preventing the vibrations from being transmitted to the operator's hand and preventing objects larger than the spacing between the blades of the blower fan from reaching the blower fan.

By providing the opening 23 on the outer side in the centrifugal direction D2 of the volute case 20, the centrifugal force acting on objects that reach the opening 23 is greater than in a case where the opening 23 is provided at another location. Since the opening 23 is located in the direction in which the centrifugal force acts, heavy objects, which are more likely to impact the blower fan, can exit through the opening 23 more easily.

If a blower fan were provided in the volute case 20 and the spacing between the blades of the blower fan were narrow, objects could become jammed between the blades of the blower fan or between the blades and the housing, and such objects might remain without ever being discharged to the first storage unit 61. Compared with such a case, in the suction device 2 shown in FIG. 2 and the like, by providing the blower fan on the downstream side of the first storage unit 61, objects larger than the interval between the blades can be prevented from reaching the blower fan.

The exhaust port 43 of the fan case 40 is configured to allow attachment of the second storage unit 62 configured to store, among the objects sucked from the suction port, an object that is not stored in the first storage unit 61. Since centrifugal force acting on the sucked objects is proportional to the mass of the objects, light objects such as dust and dirt may not exit through the opening 23 and may remain in the airflow flowing into the fan case 40. By providing the second storage unit 62, such light objects can also be stored.

As shown in FIG. 2 and the like, the exhaust port 43 of the fan case 40 is configured to face rearward when the suction port 22 is oriented forward in the suction device 2. If the second storage unit 62 were attached to the front side of the suction device 2, the second storage unit 62 could obstruct the operator's view of the area where dust is to be collected during dust collection operation. Compared with such a case, by configuring the exhaust port 43 to face rearward, the second storage unit 62 can also be attached to the rear, thereby preventing obstruction of the operator's view during operation and making the second storage unit 62 less likely to become an obstacle.

In the suction device 2, a mesh portion 32, as shown in FIG. 9 and the like, is provided between the opening 23 of the flow path R20 and the centrifugal fan 44 (an example of the blower fan). The mesh portion 32 is an example of a prevention portion configured to prevent the sucked object from moving. More specifically, the mesh portion 32 is provided in the connection part 30 where the volute case 20 and the fan case 40 are connected. According to this aspect, large objects can be prevented from hitting the blower fan (centrifugal fan 44). In the example shown in FIG. 9 or the like and the like, objects larger than the mesh of the mesh portion 32 are prevented from coming into contact with the blower fan.

The volute case 20 is configured such that a central portion thereof is connected to the fan case 40. Specifically, as shown in FIG. 9 and the like, a connection port 25 provided at a central portion of the volute case 20 is connected to the fan case 40. In the volute case 20, the flow velocity becomes higher toward the outer periphery, and the higher the flow velocity, the greater the energy loss when turbulent flow occurs. That is, since the flow velocity becomes slower toward the central portion and the energy loss when turbulent flow occurs becomes smaller, compared with a case where the fan case 40 is connected on the outer peripheral side, it is possible to reduce energy loss caused by air movement between the cases.

On the other hand, the fan case 40 has a volute shape, and the volute-shaped fan case 40 is connected to the volute case 20 at a central portion. Specifically, as shown in FIG. 11 and the like, a connection port 46 provided at a central portion of the volute-shaped fan case 40 is connected to the volute case 20.

If the outer peripheral side of the volute-shaped fan case 40 were connected to the volute case 20, the flow velocity of the inflowing air would rapidly increase, making it more likely that energy loss would occur when turbulent flow is generated. In contrast, by connecting the volute-shaped fan case 40 at the central portion, the flow velocity of the inflowing air is initially slower, which reduces energy loss caused by air movement between the cases compared with a case where the outer peripheral side of the fan case 40 is connected.

By forming the fan case 40 in a volute shape and aligning the direction of air flow in the fan case 40, which rotates around the rotation axis of the centrifugal fan 44 (blower fan) in the rotation direction D5 shown in FIG. 11, with the direction of air flow in the volute case 20, which likewise rotates around the rotation axis of the centrifugal fan 44 (blower fan) in the rotation direction D1 shown in FIG. 9, the driving energy of the blower fan can be reduced compared with a case where these directions are opposite, thereby reducing power consumption.

The suction system 1 includes the suction device 2, the first storage unit 61 attachable to the opening 23, and the second storage unit 62 attachable to the exhaust port 43. By providing storage units on both the upstream and downstream sides, heavy objects can be collected on the upstream side, thereby suppressing damage to the blower fan, while light objects are also collected.

### <Modification Example: Opening>

The position and size of the opening of the volute case are not limited to those shown in FIG. 9 and the like. For example, the opening may be larger or smaller than the opening 23 shown in FIG. 9 and the like. A larger opening makes it easier for sucked objects to be stored in the first storage unit 61; however, air also flows into the first storage unit 61 more easily, generating turbulent flow and causing energy loss, so it is preferable to set the size to a balance that maintains good airflow efficiency.

The opening may also be provided on the upstream side or on the downstream side of the flow path R20 relative to the opening 23 shown in FIG. 9 and the like. Regardless of the angular position thereof in the rotation direction D1, if the opening is provided on the outer side in the centrifugal direction D2 of the volute case 20, objects can more easily exit through the opening by centrifugal force than when provided at other positions. Further, if the opening is provided at a position facing vertically downward during a dust collection operation, gravity also acts on the objects in addition to the centrifugal force, thereby making it easier for the objects to exit through the opening.

Specifically, for example, using the positions represented by the angles from 0 degrees to 360 degrees shown in FIG. 9, it is preferable to provide the opening at a position between 90 degrees and 270 degrees, which is on the lower side in the gravity direction relative to the center P1 of the rotation axis of the volute case 20 during operation, and more preferably at a position closer to the position at 180 degrees, which is directly downward in the gravity direction during operation. For example, if the suction system 1 is used with the pipe portion 11 tilted forward by about 45 degrees relative to the installation state (placed on the ground), it is preferable for the opening to be positioned between 135 degrees and 315 degrees in the installation state, and more preferably closer to 225 degrees.

However, the positions indicated by these angles are merely examples, and the preferable position of the opening in the installation state changes depending on the inclination expected during operation. Specifically, at least a part of the opening is preferably provided on the lower side in the gravity direction relative to a virtual line passing through the center P1 of the rotation axis of the centrifugal fan 44 (blower fan) of the fan case 40 and extending parallel to the ground (in the installation state, the virtual line L2 shown in FIG. 9) during operation or in the installation state.

In the installation state of the suction system 1, the first storage unit 61 is provided on the opposite side from the battery 51 across a virtual line (the virtual line L1 shown in FIG. 9) that passes through the center P1 of the rotation axis of the centrifugal fan 44 (blower fan) provided in the fan case 40 and extends vertically to the ground, that is, on the front side relative to the virtual line L1. Accordingly, as heavy objects such as small stones are stored in the first storage unit 61, the center of gravity moves from the rear side toward the front side, thereby making it easier to tilt the suction section 10 forward during operation compared with a configuration in which the first storage unit 61 is provided on the rear side relative to the virtual line L1.

The first storage unit 61 is provided so as not to contact the ground when the suction system 1 is placed on a horizontal surface. Accordingly, the first storage unit 61 can be protected from wear caused by contact with the ground.

Although the number of openings provided in the volute case is one in the example shown in FIG. 2 and the like, the number is not limited to one, and two or more openings may be provided in the volute case. In such a case, for example, by offsetting the positions of two or more openings in the rotation direction D1, it is possible to make at least one of the openings closer to a vertically downward position even when the inclination of the suction system 1 changes during operation, thereby making it easier for objects to exit through the openings compared with a case where only one opening is provided.

### <Modification Example: Position Adjustment>

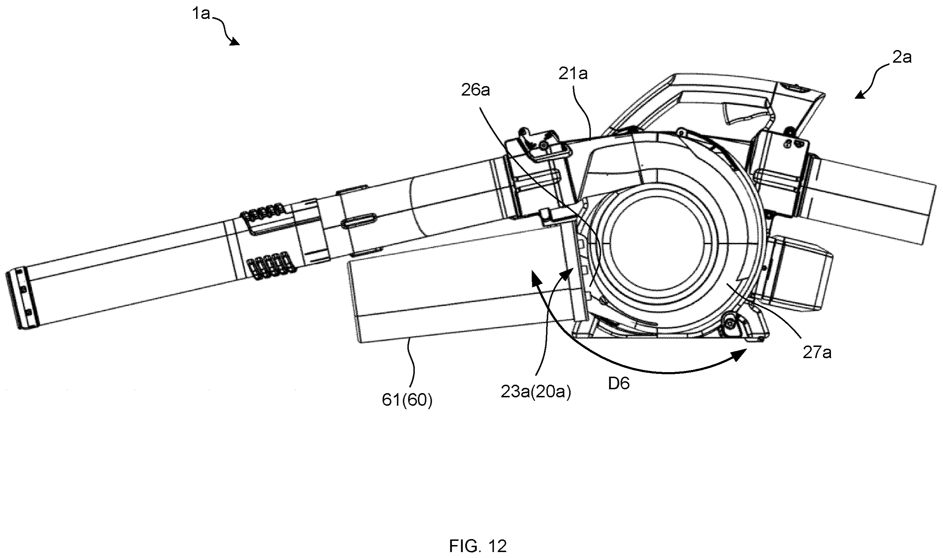

The position of the opening of the volute case may be adjustable. FIG.12 is a view showing another example of the volute case. A suction system 1a shown in FIG. 12 includes a suction device 2a, and the suction device 2a includes a volute case 20a. The opening 23a of the volute case 20a is configured to allow adjustment of a position of the opening 23a in a circumferential direction D6 of the volute case 20a. The circumferential direction D6 is a direction along an arc drawn by an outer periphery of the flow path formed by the volute case 20a (similar to the flow path R21 shown in FIG. 9), which is also along the rotation direction D1 shown in FIG. 9.

Specifically, the volute case 20a includes a housing 21a that includes a movable part 26a with the opening 23a and a main body part 27a other than the movable part. The main body part 27a is provided with a slide guide, and the movable part 26a includes an engaging portion that engages with the slide guide, making the movable part 26a slidable in the circumferential direction D6. The movable part 26a is formed with a sufficiently large size in the circumferential direction D6 so that the airtightness of the flow path R20 is maintained even when sliding.

By making the position of the opening 23a in the circumferential direction D6 adjustable in this way, the opening 23a can be brought closer to a vertically downward position in accordance with the inclination of the suction system 1 during operation. As a result, compared with a case where the position of the opening 23a in the circumferential direction D6 is fixed, objects can more easily exit through the opening 23a under the action of gravity in addition to centrifugal force, regardless of the inclination of the suction device 2.

### <Modification Example: Position Adjustment of Cases>

The configuration of the volute case and the fan case is not limited to the examples described above.

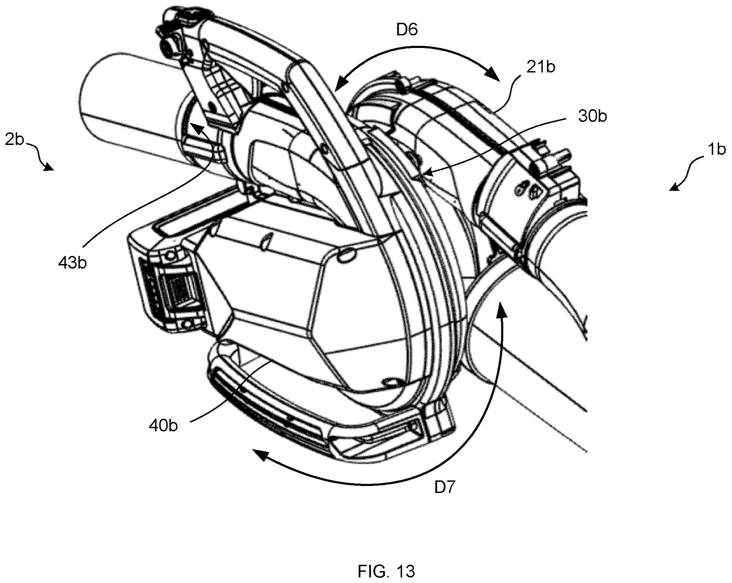

FIG.13 is a view showing another example of the suction device. A suction system 1b shown in FIG. 13 includes a suction device 2b, and the suction device 2b includes a volute case 20b, a connection part 30b, and a fan case 40b. The volute case 20b and the fan case 40b are configured to allow adjustment of a relative position with respect to each other in a circumferential direction.

The circumferential direction D6 of the volute case 20b is the same direction as in the example of FIG. 12. The circumferential direction D7 of the fan case 40b is a direction along an arc drawn by an outer periphery of the flow path formed by the volute case 20b (a flow path similar to the flow path R23 shown in FIG. 11), and is also along the rotation direction D5 shown in FIG. 11.

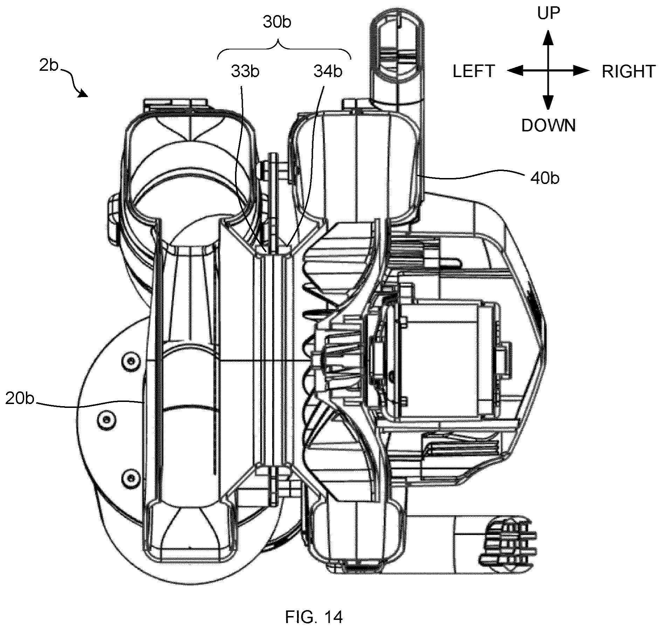

FIG.14 is a cross-sectional view of suction device 2b. As shown in FIG. 14, the connection part 30b includes a first part 33b connected to the volute case 20b and a second part 34b connected to the fan case 40b.
The first part 33b and the second part 34b are connected to each other to be rotatable in the circumferential direction. By rotating the first part 33b and the second part 34b, the circumferential positions of the volute case 20b and the fan case 40b are adjusted.

For example, in the suction system 1 shown in FIG. 2 or the like, when the front side is tilted downward during operation, the exhaust port 43 provided on the opposite side faces vertically upward, thereby making it easier for objects in the second storage unit 62 to return to the flow path R20. Compared with such a case, according to the above configuration, by rotating the fan case 40b so that the exhaust port 43b faces a horizontal or vertically downward direction, objects in the second storage unit 62 are less likely to return to the flow path R20.

### <Modification Example: Suction Hose>

The shape of the suction section is not limited to that shown in FIG. 2 and the like.

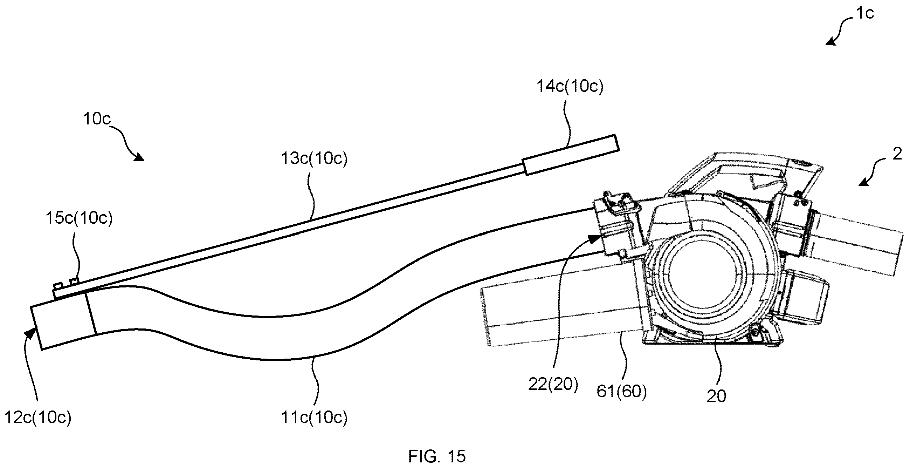

FIG.15 is a view showing another example of the suction section. The suction system 1c shown in FIG. 15 further comprises a suction hose 11c provided in a suction section 10c and a rod-shaped member 13c, in addition to the suction device 2 and the storage unit 60 shown in FIG. 2 and the like. The suction hose 11c is configured to be attachable to the suction port 22 of the volute case 20 and is configured to be extendable and contractible. The suction hose 11c, for example, is made of a flexible material in a bellows shape, allowing the tip to be moved freely.

The rod-shaped member 13c is configured such that one end thereof is attached to a tip of the suction hose 11c by a fixing member 15c, thereby allowing an operator to grip another end. A grip 14c is attached to the other end of the rod-shaped member 13c so that the operator can easily maneuver the rod-shaped member 13c.

When the suction section 10 shown in FIG. 2 and the like is attached to the suction device 2, for example, during dust collection work at a high place such as a ceiling, the opening 23 of the volute case 20 faces vertically upward, making it difficult for objects to be stored in the first storage unit 61. Compared with such a case, when the suction section 10c is attached to the suction device 2, the rod-shaped member 13c can be operated to bring the suction port 12c to a high place while keeping the opening 23 facing vertically downward. Thus, according to the example shown in FIG. 15, compared with a configuration without the suction section 10c, suction work can be performed more easily while maintaining the orientation of the opening 23, thereby reducing difficulty in storing objects in the first storage unit 61.

Even objects located in recessed places, such as gaps between equipment and walls, can be sucked by extending the suction hose 11c and inserting the tip thereof into the gap. Further, by shortening the suction hose 11c, it is also possible to reduce suction resistance. Thus, according to the suction system 1c, compared with a case where the suction hose is not extendable or retractable, it is possible not only to make it easier to suck objects from various locations but also to suppress a decrease in suction airflow.

In addition, one end of the rod-shaped member 13c is attached to the tip of the bellows-shaped suction hose 11c by the fixing member 15c, and the grip 14c is attached to the other end. Accordingly, compared with a general suction device in which a rod-shaped member and a suction port are provided at the tip of a suction hose, it is possible to take advantage of the maneuverability of the bellows-shaped suction hose 11c while shortening the total length from the suction port 12c to the suction port 22, thereby reducing suction resistance.

### <Modification Example: Storage Unit>

The shape of the storage unit is not limited to the examples described above.

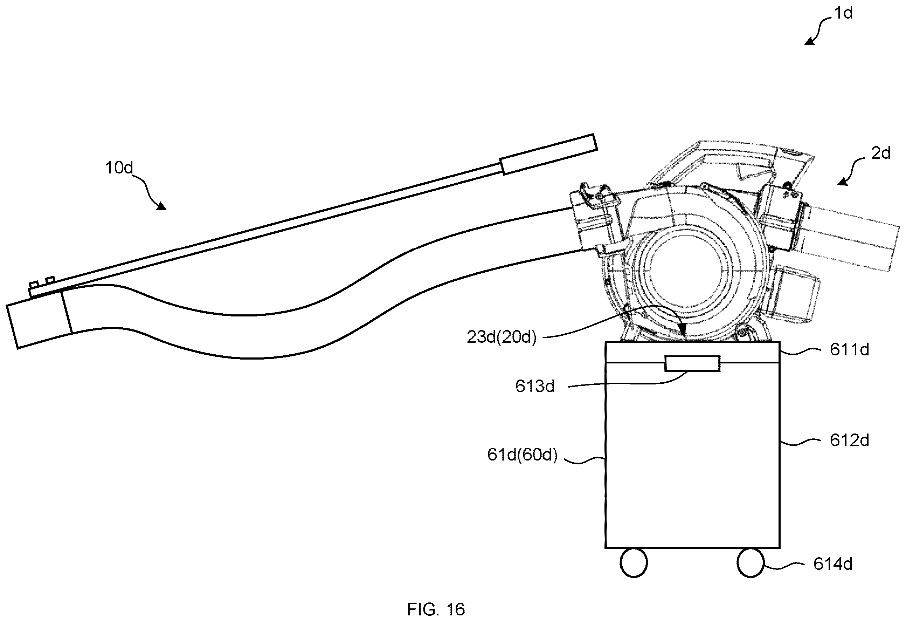

FIG.16 is a view showing another example of the storage unit. A suction system 1d shown in FIG. 16 includes, in addition to the suction section 10c shown in FIG. 15, a suction device 2d and the first storage unit 61d. A volute case 20d included in the suction device 2d has an opening 23d provided on the lower side in the gravity direction. The first storage unit 61d is attached to the opening 23d. Accordingly, compared with a case where the opening is at a different position, sucked objects are more likely to fall into the first storage unit 61d located on the lower side in the gravity direction.

The first storage unit 61d has a rectangular box shape. The first storage unit 61d includes an upper cover 611d, a container section 612d, a fixing portion 613d, and a caster section 614d. The upper cover 611d is fixed to the opening 23d. The container section 612d is fixed to the upper cover 611d by the fixing portion 613d and can be removed from the upper cover 611d by operating the fixing portion 613d without using work tools. Accordingly, compared with a case where the upper cover 611d and the container section 612d are integrally formed, it is easier to discard objects stored in the first storage unit 61d.

The caster section 614d is a detachable wheel attached to the container section 612d, with three or more wheels (preferably four) mounted so that the suction system 1d remains stable when placed on the ground. An operator can roll the suction system 1d by placing the caster section 614d on the ground, making it possible to move the suction system 1d by simply holding the handle 53 without having to support the entire system by hand, thereby improving operability compared with a case where no caster section is provided.

### <Modification Example: Offset of the First Storage Unit>

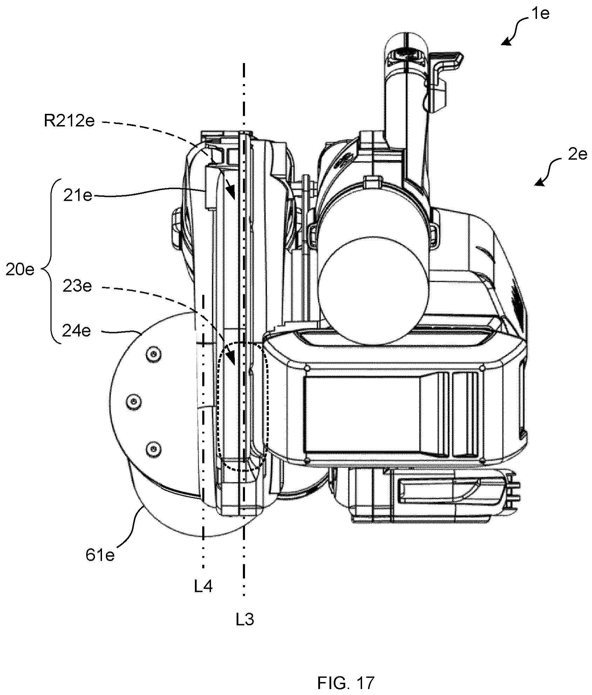

The mounting method of the first storage unit is not limited to the configurations described above. FIG.17 is a view showing another example of a mounting method of the first storage portion. A suction system 1e shown in FIG. 17 includes a suction device 2e provided with a volute case 20e and a first storage unit 61e. The volute case 20e includes a housing 21e, an opening 23e, and an attachment portion 24e.

The housing 21e forms a flow path R212e inside. The opening 23e is provided on the outer side in the centrifugal direction D2 of the flow path R212e. The first storage unit 61e is attached to the opening 23e by the attachment portion 24e. Unlike the examples shown in FIG. 5 and the like, the first storage unit 61e is attached so that, in rear view, a virtual line L3 passing through the center in the lateral direction of the flow path R212e and a virtual line L4 passing through the center in the lateral direction of the first storage unit 61e are offset from each other in the lateral direction.

By attaching the first storage unit 61e in such an offset manner, air flowing from the flow path R212e through the opening 23e into the first storage unit 61e in the volute case 20e flows along an inner side surface of the first storage unit 61e, generating a swirling flow. Accordingly, compared with a case where the first storage unit is not offset, backflow of objects from the first storage unit 61e to the flow path R212e can be suppressed.

### <Modification Example: Other Configurations>

The suction system 1 is not limited to the above-described configurations. For example, the suction system 1 may not include the second storage unit 62. Even in such a case, a part of the sucked objects, particularly heavy or large objects, is stored in the first storage unit 61, while objects that are not stored in the first storage unit 61, such as small and light objects, are discharged from the exhaust port 43.

The blower fan is not limited to a centrifugal fan and may be an axial fan. In that case, the fan case may have a volute shape or another shape, such as a cylindrical shape. Even with an axial fan, by generating an airflow in the direction flowing out from the connection port 25 of the volute case 20, an airflow along the flow path R21 is created inside the volute case 20, and sucked objects are stored in the first storage unit 61 through the opening 23. Further, by attaching the second storage unit 62 to the exhaust port of the fan case, it is possible to store objects that are not stored in the first storage unit 61.

In the suction system 1, the volute case 20 and the fan case 40 are connected by the connection part 30. However, the volute case 20 and the fan case 40 may be directly connected without using the connection part 30. Further, the storage units (the first storage unit and the second storage unit), which in the above examples are non-deformable containers, may instead be deformable containers, such as vinyl bags or nets. The storage unit may have any shape as long as it can maintain a state of storing the incoming objects.

The suction section is not limited to the examples described above (the suction section 10 and the suction section 10a). The suction section 10 may be longer or shorter. The suction section 10 may be detachably attached to the suction device 2 or may be integrated with the suction device 2. Further, although the suction system 1 is a portable type used by an operator during work, a stationary type installed at a fixed location may also be adopted. In any case, by having a configuration in which the volute case connected to the fan case upstream of the blower fan includes an opening, objects subjected to centrifugal force exit from the flow path through the opening, thereby suppressing, compared with a configuration without such an opening, the generation of unpleasant noise caused by sucked objects and the generation of vibration transmitted to the handle 53.

Although the centrifugal fan 44 and the motor 45 are described as being housed in an internal space formed by covering the housing 41 with a cover, incorporation inside the housing 41 may also be adopted. Further, although the second storage unit 62 is described as being a filter made of nonwoven fabric or the like or a dust bag, a container having a cylindrical shape with a bottom surface may also be used, and a container having a bottom surface in a rectangular, triangular, or elliptical shape may also be used as long as objects can be stored. In this case, similar to the first storage unit 61, the second storage unit 62 is preferably as lightweight as possible while having sufficient rigidity to resist deformation under the weight of stored objects. However, the second storage unit 62 needs to be provided with air holes for discharging the incoming air. Preferably, the air holes are provided, for example, at an upward position in the vertical direction so that stored objects such as dust and dirt are less likely to escape outside.

Further, the following aspects may also be provided.
(1) A suction device, comprising: a volute case including a suction port; and a fan case accommodating a blower fan and including an exhaust port, wherein: the volute case is configured to form a flow path, together with the fan case, from the suction port to the exhaust port, and is connected to the fan case on an upstream side of the flow path, an opening being further provided on a radially outer side of the volute case, and the opening is configured to allow attachment of a first storage unit configured to store an object that passes through the opening among objects sucked from the suction port by air flow generated in the flow path by the blower fan.
   According to this aspect, generation of unpleasant noise caused by sucked objects and vibration of the handle can be suppressed.
(2) The suction device according to (1), wherein the exhaust port is configured to allow attachment of a second storage unit configured to store, among the objects sucked from the suction port, an object that is not stored in the first storage unit.
   According to this aspect, even lightweight objects can be stored
(3) The suction device according to (2), wherein the exhaust port is configured to face rearward when the suction port is oriented forward in the suction device.
   According to this aspect, the second storage unit can be prevented from becoming an obstacle.
(4) The suction device according to any one of (1) to (3), further comprising a prevention portion provided between the opening of the flow path and the blower fan, the prevention portion being configured to prevent the sucked object from moving.
   According to this aspect, large objects can be prevented from striking the blower fan.
(5) The suction device according to any one of (1) to (4), wherein the volute case is configured such that a central portion thereof is connected to the fan case.
   According to this aspect, energy loss caused by air movement between the cases can be reduced.
(6) The suction device according to (5), wherein the fan case has a volute shape, and the fan case is configured such that a central portion thereof is connected to the volute case.
   According to this aspect, energy loss caused by air movement between the cases can be further reduced.
(7) The suction device according to (6), wherein the volute case and the fan case are configured to allow adjustment of a relative position with respect to each other in a circumferential direction.
   According to this aspect, objects can be prevented from remaining inside the fan case regardless of the inclination of the suction device.
(8) The suction device according to any one of (1) to (7), wherein the opening is configured to allow adjustment of a position of the opening in a circumferential direction of the volute case.
   According to this aspect, objects can be easily discharged from the opening regardless of the inclination of the suction device.
(9) A suction system, comprising: the suction device according to any one of claims 1 to 8; a first storage unit attachable to the opening; and a second storage unit attachable to the exhaust port.
(10) The suction system according to (9),further comprising: a suction hose configured to be attachable to the suction port, the suction hose being configured to be extendable and contractible, and a rod-shaped member is configured such that one end thereof is attached to a tip of the suction hose, thereby allowing an operator to grip another end.

According to this aspect, the opening can be easily kept directed vertically downward during the suction operation.

The present disclosure is not limited thereto. Further, the above-described embodiments and modified examples may be implemented in any combination.

As described above, various embodiments of the present invention have been explained, but these are presented by way of example and are not intended to limit the scope of the invention.
The novel embodiments can also be implemented in various other forms, and various omissions, replacements, and modifications can be made without departing from the gist of the invention. Such embodiments and their modifications are included in the scope and spirit of the invention and are also encompassed within the scope of the invention set forth in the claims and equivalents thereof.

## Claims

1. A suction device, comprising:
a volute case including a suction port; and
a fan case accommodating a blower fan and including an exhaust port, wherein:
the volute case is configured to form a flow path, together with the fan case, from the suction port to the exhaust port, and is connected to the fan case on an upstream side of the flow path, an opening being further provided on a radially outer side of the volute case, and
the opening is configured to allow attachment of a first storage unit configured to store an object that passes through the opening among objects sucked from the suction port by air flow generated in the flow path by the blower fan.

2. The suction device according to claim 1, wherein
the exhaust port is configured to allow attachment of a second storage unit configured to store, among the objects sucked from the suction port, an object that is not stored in the first storage unit.

3. The suction device according to claim 2, wherein
the exhaust port is configured to face rearward when the suction port is oriented forward in the suction device.

4. The suction device according to claim 1, further comprising
a prevention portion provided between the opening of the flow path and the blower fan, the prevention portion being configured to prevent the sucked object from moving.

5. The suction device according to claim 1, wherein
the volute case is configured such that a central portion thereof is connected to the fan case.

6. The suction device according to claim 5, wherein
the fan case has a volute shape, and
the fan case is configured such that a central portion thereof is connected to the volute case.

7. The suction device according to claim 6, wherein
the volute case and the fan case are configured to allow adjustment of a relative position with respect to each other in a circumferential direction.

8. The suction device according to claim 1, wherein
the opening is configured to allow adjustment of a position of the opening in a circumferential direction of the volute case.

9. A suction system, comprising:
the suction device according to claim 1;
a first storage unit attachable to the opening; and
a second storage unit attachable to the exhaust port.

10. The suction system according to claim 9,
further comprising:
a suction hose configured to be attachable to the suction port, the suction hose being configured to be extendable and contractible, and
a rod-shaped member is configured such that one end thereof is attached to a tip of the suction hose, thereby allowing an operator to grip another end.
